# EUROPÄISCHE PATENTSCHRIFT

(11) **EP 1 043 532 B1**
(45) Veröffentlichungstag und Bekanntmachung des Hinweises auf die Patenterteilung: **10.11.2004**
(21) Anmeldenummer: 00106380.9
(22) Anmeldetag: 24.03.2000
(51) Int. Cl.: F16L 3/24, F16B 2/06

(54) **Rohrhalterung**
Pipe support
Support de conduite

(30) Priorität: 31.03.1999 DE 19914659; 17.12.1999 DE 19961005; 29.12.1999 DE 19963581
(43) Veröffentlichungstag der Anmeldung: 11.10.2000
(73) Patentinhaber: Stange, Paul, 58256 Ennepetal (DE)
(72) Erfinder: Stange, Paul, 58256 Ennepetal (DE)
(74) Vertreter: Sparing - Röhl - Henseler Patentanwälte

(56) Entgegenhaltungen:
- DE-C- 4 328 104
- DE-C- 4 328 105
- DE-C- 4 328 106
- US-A- 1 470 642
- US-A- 4 397 437

## Beschreibung

Die Erfindung betrifft eine Rohrhalterung nach dem Oberbegriff des Anspruchs 1.

Aus der DE 43 28 105 C1 und der DE 43 28 106 C1 ist jeweils eine Rohrhalterung mit einem Rohrträger bekannt, der über eine mit diesem in Eingriff stehende Halteeinrichtung an einem einen Flansch aufweisenden Trägerprofil befestigbar ist, wobei die Halteeinrichtung zwei als Klemmbacken ausgebildete Haltebacken umfaßt, die einander gegenüberliegend angeordnet mit dem Flansch des Trägerprofils in Eingriff stehen und jeweils einen sich auf dem Flansch abstützenden Schenkel aufweisen, durch welchen sich eine die beiden Haltebacken verbindende Spannschraube erstreckt.

Die Länge der sich gegenüberliegenden Schenkel richtet sich nach den Flanschbreiten, für welche die Haltebacken bestimmt sind, wobei die maximal vorgesehene Flanschbreite unter anderem aus Stabilitätsgründen eine Mindestschenkellänge erfordert. Beispielsweise neigen zu kurze Schenkel aufgrund ungenügender Kippsicherheit dazu, sich beim Festziehen der Spannschraube an dieser zu verkanten und verhindern so eine ordnungsgemäße Montage der Halteeinrichtung, da das vorbestimmte Drehmoment, welches die für ein sicheres Festklemmen der Halteeinrichtung am Flansch notwendige Spannung zwischen den Schenkeln gewährleisten soll, aufgrund des Verkantens bereits dann erreicht wird, wenn die Schenkel noch nicht ausreichend stark am Flansch festgeklemmt sind. Da die Mindestschenkellänge wiederum die minimale Flanschbreite festlegt, können lange Schenkel aufweisende Haltebacken für Träger mit breitem Flansch nicht auf beliebig schmale Flansche montiert werden.

Aufgabe der Erfindung ist es, eine Rohrhalterung nach dem Oberbegriff des Anspruchs 1 zu schaffen, die bei gegebener Schenkellänge auf Trägerprofile mit unterschiedlich breiten Flanschen montierbar ist.

Diese Aufgabe wird entsprechend dem kennzeichnenden Teil des Anspruchs 1 gelöst.

Dadurch, daß gegenüberliegende Haltebacken der Halteeinrichtung ineinanderschiebbar sind, sind Haltebacken, die auf dem Trägerflansch aufliegende, lange Schenkel aufweisen, auch bei relativ kleinen Trägerflanschbreiten einsetzbar. Durch die Verwendung längerer Schenkel erhält die Rohrhalterung insgesamt eine verbesserte Stabilität insbesondere gegen Kippen um die Flanschkante bei Belastungen, wie sie z.B. durch Rohrleitungsschläge auftreten können.

Einer der sich auf dem Trägerflansch abstützenden Schenkel der Haltebacke einer Halteeinrichtung kann eine stirnseitig mündende Aussparung aufweisen, in welche der entsprechende gegenüberliegende Schenkel der zugehörigen Haltebacke der Halteeinrichtung teilweise einschiebbar ist. Die Aussparung kann hierbei den eingeschobenen Schenkelabschnitt umschließen und gegebenenfalls abstützen sowie an der dem Flansch zu- und/oder abgewandten Seite zumindest teilweise offen sein, um ein vereinfachtes Montieren durch gegenseitiges Aufsetzen der Schenkel zu ermöglichen. Gegebenenfalls können mehrere Aussparungen insbesondere an beiden Haltebacken zum kammartigen Ineinanderschieben vorgesehen sein.

Die Haltebacken weisen einen weiteren Schenkel auf, der zum Umgreifen des Flansches in Richtung zum Trägerprofil abgewinkelt sein und zusammen mit dem sich auf dem Flansch abstützenden Schenkel eine Klemm- oder Haltenut zur Aufnahme des Flansches bilden kann. Hierbei können gegebenenfalls Verstärkungsrippen vorgesehen sein, um die mechanische Stabilität der Haltebacken zu erhöhen.

Um einem Verkanten der Schenkel an die Spannschraube entgegenzuwirken, können die Haltebacken endseitig eine abgeschrägte Kontaktfläche mit dem Kopf oder der Mutter der Spannschraube aufweisen, so daß beim Festspannen ein Kippmoment erzeugt wird, welches die Schenkel auf die Flanschoberseite drückt.

Der zweckmäßigerweise einen Fuß umfassende und über diesen mit den Haltebacken in Eingriff stehende Rohrträger kann in Richtung der Rohrachse des aufzunehmenden Rohrs verschieblich montierbar sein, um beispielsweise thermisch bedingte Bewegungen des Rohrträgers zu ermöglichen. Zur gegen Abheben des Rohrträgers gesicherten Führung der Bewegungen können am sich auf dem Flansch abstützenden Schenkel Abhebesicherungen vorgesehen sein. Der Fuß kann entweder direkt oder über Gleitelemente auf dem Flansch und/oder auf zweckmäßigerweise an den Haltebacken vorgesehenen Auflagestücken aufliegen, wobei die Gleitelemente vom Fuß und/oder den Auflagestücken getragen werden können. Über Abstandselemente können die Haltebacken an die Dicke des Fußes der Rohrhalterung angepaßt werden.

Auf derselben Flanschseite benachbart angeordnete Haltebacken können durch einen Steg, welcher eine Auflage für den Rohrträger bilden und Abstandsund/oder Gleitelemente tragen kann, miteinander verbunden sein.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt eine teilweise geschnittene Seitenansicht einer Rohrhalterung.
Fig. 2 zeigt eine teilweise geschnittene Frontansicht der Rohrhalterung aus Fig. 1.
Fig. 3 zeigt eine Draufsicht auf die Rohrhalterung aus Fig. 1.
Fig. 4a und 4b zeigen jeweils eine weitere Ausführungsform einer Halteeinrichtung an einem Trägerprofil im Schnitt.
Fig. 5 zeigt eine teilweise geschnittene Frontansicht einer weiteren Ausführungsform eines Rohrhalterungsabschnitts.
Fig. 6a zeigt eine Draufsicht auf eine weitere Ausführungsform eines Rohrhalterungsabschnitts.
Fig. 6b und 6c zeigen eine weitere Ausführungsform eines Rohrhalterungsabschnitts an einem Trägerprofil in Seitenansicht bzw. Draufsicht.
Fig. 6d und 6e zeigen eine weitere Ausführungsform eines Rohrhalterungsabschnitts an einem Trägerprofil in Seitenansicht bzw. Draufsicht.
Fig. 7 zeigt einen seitlichen Schnitt durch eine weitere Ausführungsform einer Halteeinrichtung an einem Trägerprofil.
Fig. 8a und 8b zeigen eine Frontansicht einer Ausgestaltung der rechten bzw. linken Haltebacke aus Fig. 7.
Fig. 9 zeigt einen in zwei Haltebacken geschnittenen quaderförmigen Rohkörper.
Fig. 10 und 11 zeigen eine weitere Ausführungsform eines Rohrhalterungsabschnitts an einem Trägerprofil in Draufsicht. bzw. Seitenansicht.
Fig. 12 zeigt eine weitere Ausführungsform eines Rohrhalterungsabschnitts an einem Trägerprofil in Draufsicht.
Fig. 13 zeigt einen Schnitt durch den Rohrhalterungsabschnitt der Fig. 12 entlang der Linie A-A.
Fig. 14 und 15 zeigen jeweils eine weitere Ausführungsform eines Rohrhalterungsabschnitts an einem Trägerprofil im Schnitt bzw. in Draufsicht.
Fig. 16 zeigt eine Ausführungsform einer Rohrhalterung mit einem Adapterstück im Schnitt.
Fig. 17 und 18 zeigen eine weitere Ausführungsform einer Rohrhalterung im Schnitt längs bzw. quer zur Rohrachse.
Fig. 19 zeigt einen Abschnitt des Rundbügels aus den Fig. 17 und 18.
Fig. 20 und 21 zeigen weitere Ausführungsformen einer Rohrhalterung im Schnitt längs bzw. quer zur Rohrachse.
Fig. 22 und 23 zeigen jeweils eine weitere Ausführungsform einer Rohrhalterung im Schnitt.

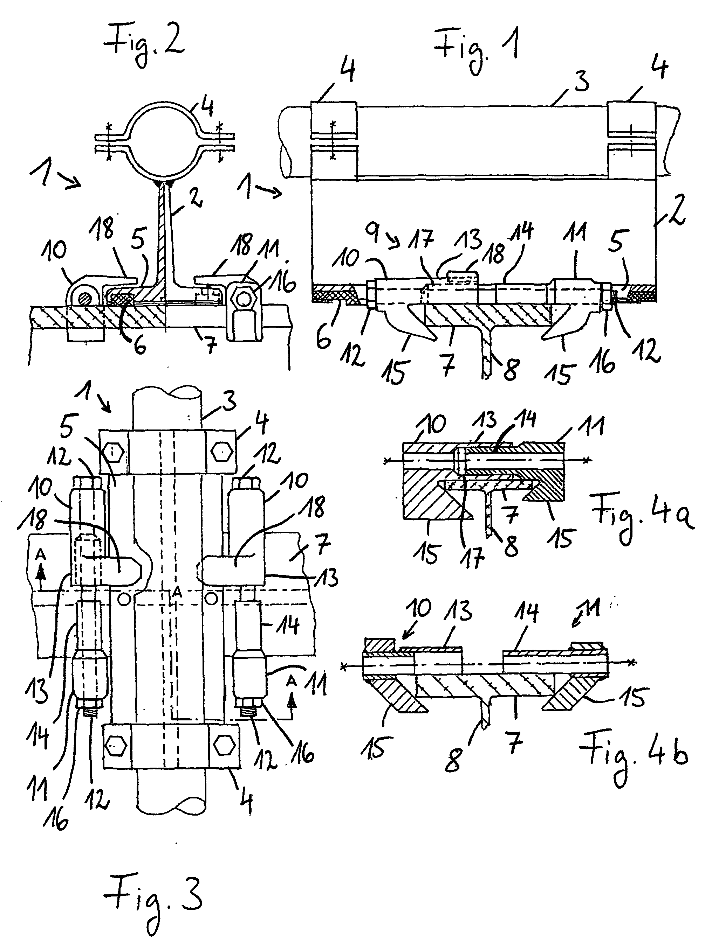

Die in den Fig. 1 bis 3 gezeigte Rohrhalterung 1 umfaßt einen Rohrträger 2, der ein Rohr 3 aufnehmende Schellen 4 aufweisen kann und einen Fuß 5 umfaßt, der über zwei unterseitig angeordnete, als Gleitschienen ausgebildete Gleitelemente 6 auf einem Flansch 7 eines Trägerprofils 8 aufliegend in Rohrichtung verschieblich mit zwei Paaren von als Klemmbacken ausgebildeten, ineinanderschiebbaren und zusammen eine Halteeinrichtung 9 bildenden Haltebacken 10, 11 in Eingriff steht, die einander gegenüberliegend paarweise mittels einer Spannschraube 12 am Flansch 7 festgeklemmt sind.

Die Haltebacken 10, 11 umfassen als Klemmbacken ausgebildet jeweils einen sich auf dem Flansch 7 abstützenden Schenkel 13, 14, der zusammen mit jeweils einem in Richtung auf das Trägerprofil 8 abgewinkelten Schenkel 15 eine Klemmnut zum klemmenden Umgreifen des Flansches 7 bildet. Sie können jedoch auch nicht klemmend ausgestaltet sein. Sie können jeweils auch mehrere insbesondere parallele Schenkel 13, 14 bzw. 15 umfassen.

Zweckmäßigerweise erstreckt sich längs durch beide Schenkel 13, 14 eine Bohrung zur Aufnahme der Spannschraube 12, die zusammen mit einer Mutter 16 die Haltebacken 10, 11 gegen den Flansch 7 klemmend verspannt. Gegebenenfalls kann an Stelle der Mutter 16 in der Bohrung der Haltebacke 11 ein Innengewinde vorgesehen sein oder die Spannschraube 12 sich nicht durch die Schenkel 13, 14, sondern beispielsweise durch auf die Haltebacken 10, 11 aufgesetzte Bleche erstrecken.

Der Schenkel 13 bzw. 14 weist endseitig mit der Mutter 16 bzw. mit dem Kopf der Spannschraube 12 eine Kontaktfläche auf, die senkrecht zur Spannschraubenachse (vgl. Haltebacke 10 in Fig. 1) verlaufen oder vorzugsweise in Richtung zum Profilträger 8 abgeschrägt (vgl. Haltebacke 11 in Fig. 1) sein kann. In letzterem Fall erzeugt beim Festspannen der Halteeinrichtung 9 am Flansch 7 eine derart abgeschrägte Kontaktfläche ein Kippmoment zum Andrücken des Schenkels 14 an die Flanschoberfläche und wirkt somit einem Abheben des Schenkels 14 von der Flanschoberfläche und einem Verkanten des Schenkels 14 an die Spannschraube 12 entgegen.

Auf einem Abschnitt vorbestimmter Länge an seinem freien Ende ist der U-förmige und zum Flansch 7 offene Schenkel 14, der die Spannschraube 12 zusammen mit dem Flansch 7 umschließt, in seinem Querschnitt derart vermindert, daß er mit diesem Abschnitt in eine komplementäre endseitige Aussparung 17 in den gegenüberliegenden Schenkel 13 einschiebbar ist. Die Aussparung 17 stellt eine stufenförmige Ausweitung der die Spannschraube 12 aufnehmenden Bohrung dar. Die Halteeinrichtung 9 kann gegebenenfalls Schenkel 13, 14 mit hohlzylindrischen ineinanderschiebbaren Abschnitten umfassen, vgl. Fig. 4a, wobei auch hier der teilweise eingeschobene Schenkel 14 vom aufnehmenden Schenkel 13 entsprechend gestützt wird, wobei die Aussparung 17 im Schenkel 13 eine zur Bohrung in den Schenkeln 13, 14 koaxiale Bohrung mit einem dem Außendurchmesser des Schenkels 14 entsprechenden Durchmesser sein kann.

Der auf dem Flansch aufliegende Schenkel 14 der in Fig. 4b gezeigten Ausführungsform ist ein flanschseitig zumindest entlang des am Flansch 7 aufliegenden Abschnitts offener Rohrabschnitt, der in eine Bohrung des in Richtung zum Trägerprofil 8 abgewinkelten Schenkels 15, der vorzugsweise ein Brenn- oder Schmiedeteil ist, eingesetzt und mit dem Schenkel 15 beispielsweise durch Verschweißen verbunden ist. Gegebenenfalls ist der den Flansch 7 umgreifende Schenkel 15 ein an dem Schenkel 14 befestigtes und geformtes Blechteil. Der Schenkel 13 der gegenüber angeordneten Haltebacke 10 kann zwei sich teilweise überlappende und miteinander verbundene Rohrabschnitte umfassen, von denen einer in eine Bohrung im entsprechenden Schenkel 15 eingesetzt ist und zweckmäßigerweise den gleichen Durchmesser aufweist wie der Rohrabschnitt des Schenkels 14, während der andere einen ein Einschieben des Schenkels 14 ermöglichenden Innenradius hat und die Aussparung 17 bildet. Beide Rohrabschnitte des Schenkels 13 können auf einer vorbestimmten Länge einen U-förmigen Abschnitt bildend flanschseitig offen sein.

Die Schenkel 13, 14 können in weiteren, nicht dargestellten Ausführungsformen andere als die beschriebenen Querschnitte haben, solange die Aussparung 17 zum teilweisen Aufnehmen des Schenkels 14 geeignet ist. Gegebenenfalls kann die Aussparung 17 U-, kreisabschnitts-, prisma- oder dreieckigen Querschnitts sein und einen insbesondere komplementär dazu oder beispielsweise hohlkreiszylindrisch ausgebildeten Schenkel 14 aufnehmen.

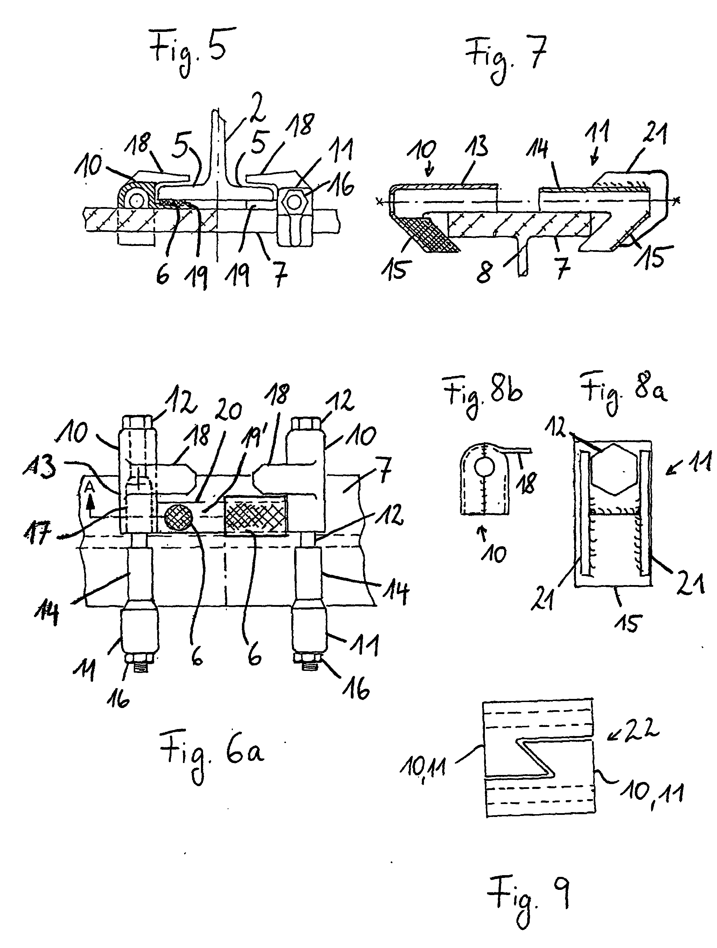

Wie in Fig. 2 gezeigt können an den Haltebacken 10, 11 Abhebesicherungen 18 vorgesehen sein, die zusammen mit der Flanschoberfläche oder mit gegebenenfalls an den Haltebacken 10, 11 vorgesehenen Auflagestücken 19 eine den Fuß 5 seitlich umfassende Halterung für den Rohrträger 2 bilden, vgl. Fig. 5. Hierbei können von der Fußunterseite, der Flanschoberfläche, den Abhebesicherungen 18 und/oder den Auflagestücken 19 getragene Abstands- und/oder Gleitelemente 6 vorgesehen sein, um einen metallischen Gleiteingriff und die damit verbundenen Korrosionsprobleme zu vermeiden. Die Abhebesicherungen 18 und Auflagestücke 19 können gemeinsam als U-förmiges Blech oder als einzelne Bleche vorzugsweise mittels Schweißen an den Haltebacken 10, 11 befestigt sein.

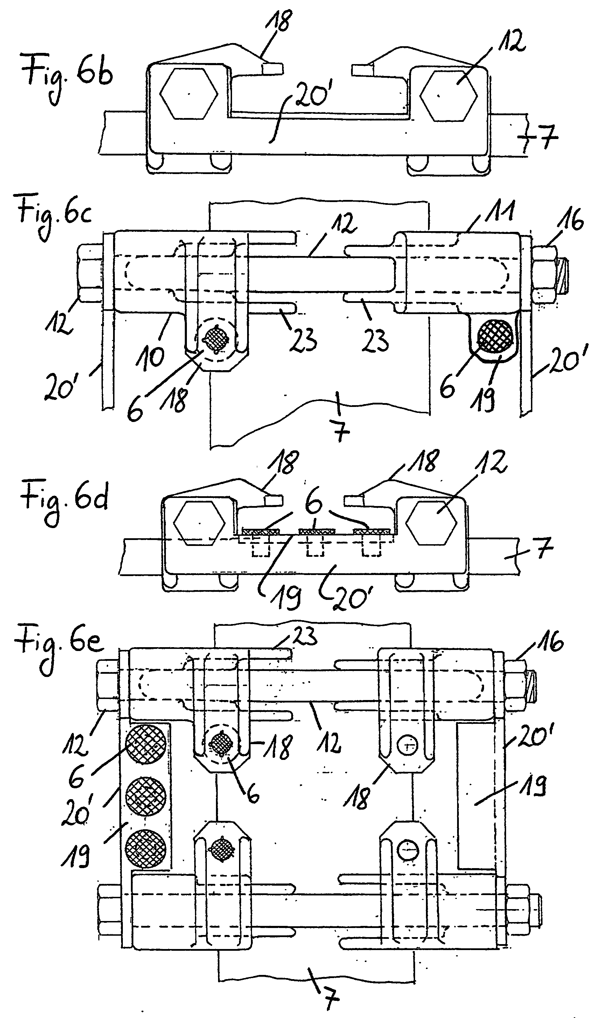

Wie aus Fig. 6a ersichtlich können auf der selben Flanschseite benachbart angeordnete Haltebacken 10, 11 über einen Steg 20 miteinander verbunden sein, der insbesondere eine Auflage 19' für den Fuß 5 des Rohrträgers 2 bildet und Abstands- und/oder Gleitelemente 6 tragen kann. Zweckmäßig sind z.B. scheibenförmige Abstands- und/oder Gleitelemente 6, die auf den Steg 20 aufgeklebt oder in diesen eingesetzt sind, oder den Steg 20 umklammernde Abstands- und/oder Gleitelemente 6 mit U-förmigem Querschnitt. Gegebenenfalls können Stege 20' insbesondere paarweise vorgesehen sein, die sich beidseitig des Flansches 7 benachbart zu den gegenüberliegenden Flanschkanten erstreckend mit jeweils zwei mit der gleichen Flanschkante in Eingriff stehenden Haltebacken 10, 11 über die Spannschrauben 12 verschraubt sind, vgl. Fig. 6b, 6c. Die an den Haltebacken 10, 11 gegebenenfalls vorgesehenen Auflageflächen 19 können einstückig mit dem Steg 20' ausgebildet, insbesondere ein parallel zur Flanschoberfläche aus dem Steg 20' herausgebogener Abschnitt sein, vgl. Fig. 6d, 6e. Die Stege 20, 20' können auch einstückig mit den Haltebacken 10, 11 ausgestaltet sein.

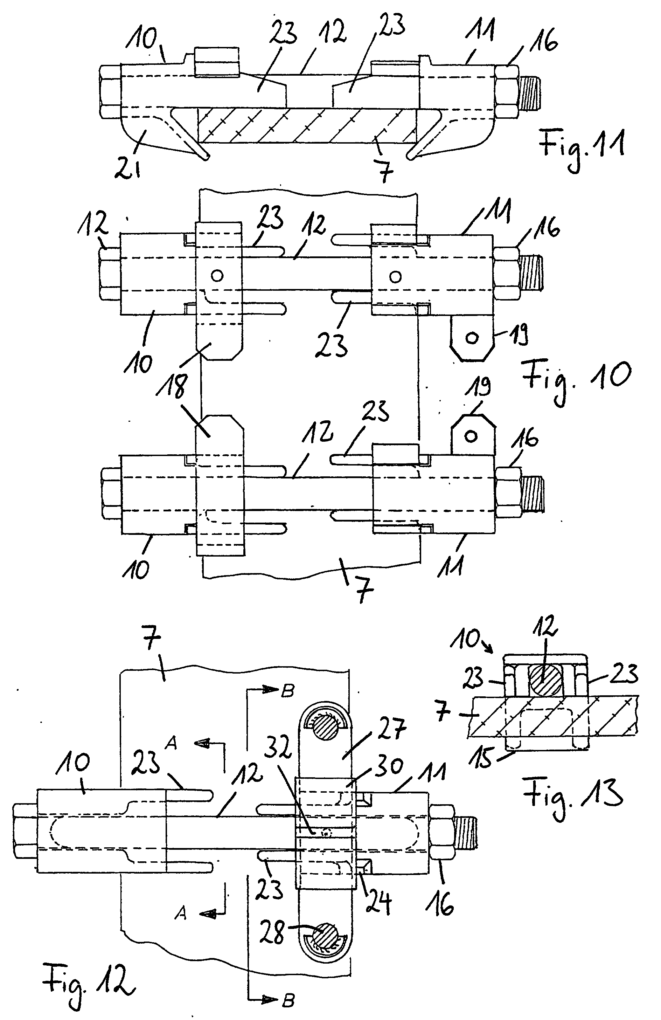

An den Haltebacken 10, 11 kann mindestens eine Verstärkungsrippe 21 beispielsweise in Form eines auf der dem Rohr zugewandten Seite aufgesetzten Blechs vorgesehen sein (Fig. 7), das sich bis auf den zum Trägerprofil abgewinkelten Schenkel 15 erstrecken und mehrfach, insbesondere paarweise, vorgesehen sein kann, vgl. Fig. 8a. Zweckmäßigerweise sind zwei Verstärkungsrippen 21 zur Aufnahme der Mutter 16 bzw. des Kopfs der Spannschraube 12 so beabstandet, daß sie als Gegenschlüssel arbeitend ein Drehen der Mutter 16 bzw. des Kopfs beim Festpannen der Spannschraube 12 verhindern. Die Verstärkungsrippen 21 können auch seitlich der Haltebacken 10, 11 angeordnet sein. Bei Verwendung von Gußteilen sind die Verstärkungsrippen 21 zweckmäßigerweise einstückig mit den Haltebacken 10, 11 ausgebildet.

Die Haltebacken 10, 11 können ganz oder teilweise Blechhohlkörper sein, deren Hohlräume gegebenenfalls beispielsweise im Spritzgußverfahren ganz oder teilweise mit Kunststoff gefüllt werden können, vgl. Fig. 7. Insbesondere können die Haltebacken 10, 11 aus zwei gestanzten und miteinander verschweißten Blechhälften gebildet werden. Durch Stanzen und/oder Schneiden können Abhebesicherungen 18, Auflageflächen 19 und/oder Verstärkungsrippen 21 einstückig aus dem Hohlkörper geformt werden, vgl. Fig. 8b.

Die Haltebacken 10, 11 können auch Guß- oder Blechteile sein und Profilabschnitte, insbesondere U-Profilstahlabschnitte, umfassen.

Die Haltebacken 10, 11 können insbesondere für eine günstigere Produktion durch Zerschneiden eines quaderförmigen Rohkörpers 22, der ein Metallteil, z.B. ein dickes Stahlblech, sein kann und mit zwei parallelen Bohrungen für die spätere Aufnahme der Spannschrauben 12 der jeweiligen späteren Haltebacken 10, 11 versehen ist oder wird, in zwei komplementäre Haltebacken beispielsweise mit einem Laser oder einem Brennschneider hergestellt werden, vgl. Fig. 9.

In einer nicht gezeigten Ausführungsform können gegenüberliegende Schenkel 13, 14 kammartig ineinanderschiebbare Abschnitte aufweisen.

Zweckmäßigerweise sind an den Haltebacken 10, 11 jeweils zwei Zähne in Form von senkrecht zur Flanschoberfläche insbesondere beidseitig der Spannschraube 12 angeordneten Wandungen 23 vorgesehen, vgl. Fig. 10 und 11. Die Zähne an gegenüberliegenden Haltebacken 10, 11 können gleich voneinander beabstandet sein, so daß die Haltebacken 10, 11 quer zur Spannschraubenachse gegeneinander versetzt ineinanderschiebbar sind. Hierbei bildet jeweils ein Zahn einer der Haltebacken 10 oder 11 zusammen mit der Spannschraube 12 einen Eingriff für den entsprechenden Zahn der gegenüberliegenden Haltebacke 11 bzw. 10. Die Wandungen 23 können zur Materialeinsparung an ihren freien Enden zur Flanschoberfläche hin abgeschrägt sein, vgl. Fig. 11.

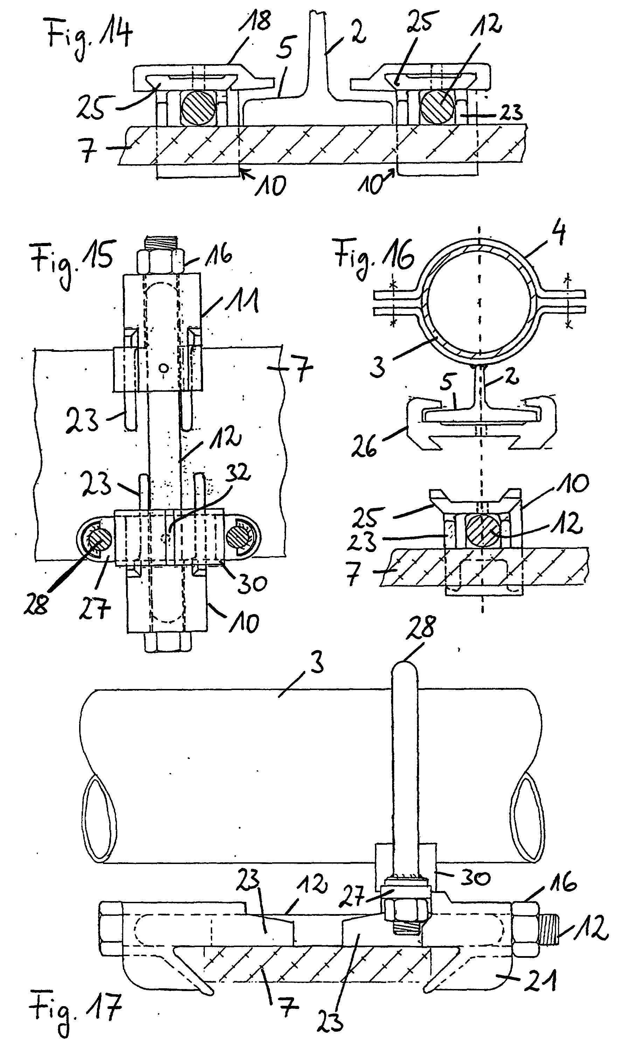

Wie in Fig. 12 und 13 gezeigt, können die beiden Zähne der Haltebacke 10 weiter voneinander beabstandet sein als die entsprechenden Zähne der gegenüberliegenden Haltebacke 11 und zusammen mit der Spannschraube 12 zwei Eingriffe für die beiden Zähne der gegenüberliegenden Haltebacke 11 bilden. An der der Spannschraube 12 abgewandten Seite können die Haltebacken 11 insbesondere benachbart zu den Wandungen 23 das Einschieben beschränkende Anschläge 24 beispielsweise in Form von komplementär zu den Wandungen 23 der Haltebacke 10 ausgestalteten Aussparungen aufweisen.

An jeder Haltebacke 10, 11 kann eine Aufnahme 25 vorgesehen sein, die mit einem Element der Rohrhalterung 1 in Eingriff bringbar ist, vgl. Fig. 14. Zweckmäßigerweise ist die Aufnahme 25 zum Aufschieben des Elements der Rohrhalterung 1 in Spannschraubenlängsrichtung ausgestaltet und weist hierfür beispielsweise quer zur Spannschraubenachse einen trapezförmigen Querschnitt auf. Die Längsachse der Aufnahme 25 verläuft parallel zur Spannschraubenachse und kann gegenüber dieser versetzt sein. Als Element der Rohrhalterung 1 sind insbesondere eine Abhebesicherung 18 (vgl. Fig. 14), ein Auflagestück 19, der Rohrträger 2 oder ein Adapterstück 26 (vgl. Fig. 16) beispielsweise für den Fuß 5 eines Rohrträgers 2 vorgesehen, welches gegebenenfalls zum Ausgleichen eines Versatzes zwischen der Aufnahme 25 und der Spannschraubenachse ausgestaltet sein.

Der Rohrträger 2 kann zur Aufnahme des Rohrs 3 einen U-förmigen, mit seinen freien Enden an einer Auflagefläche 27 für das Rohr 3 verschraubten Rundbügel 28 umfassen, vgl. Fig. 12, 15, 17 und 18. Der Rundbügel 28 kann zur Vermeidung von Beschädigungen (z.B. Korrosion) am Rohr 3 insbesondere durch einen aufgesteckten, gegebenenfalls verstärkten Kunststoffschlauch 29 ummantelt sein, vgl. Fig. 19, der auch auf den Rundbügel 28 aufvulkanisiert sein kann.

Zwischen dem Rohr 3 und der Auflagefläche 27 kann ein Kunststoffeinsatz 30 vorgesehen sein, vgl. Fig. 18. Der Kunststoffeinsatz 30 ist vorzugsweise ein Hohlkörper mit Verstärkungsrippen und weist zweckmäßigerweise mittig eine Senke 31 auf, die bodenseitig einen parallel zur Rohrachse insbesondere geneigt verlaufenden Kanal 32 zum Abführen von Wasser umfaßt.

Der Kunststoffschlauch 29 und/oder der Kunststoffeinsatz 30 erleichtern ein Gleiten des Rohrs 3 in der Rohrhalterung 1 und sind vorzugsweise elektrostatisch ableitend, um eine elektrostatische Aufladung des Rohrs 3 zu verhindern. Dadurch entfallen zusätzliche Masseverbindungen.

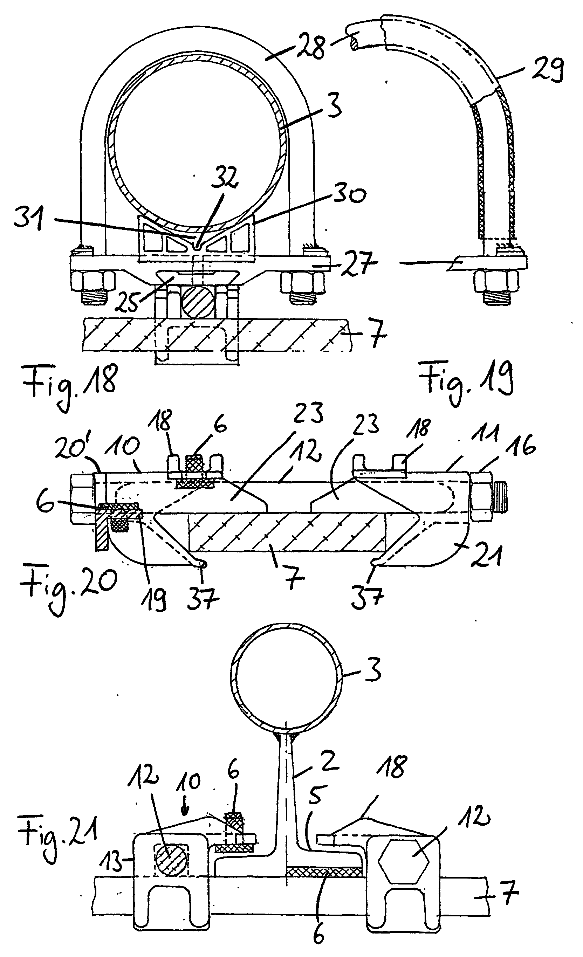

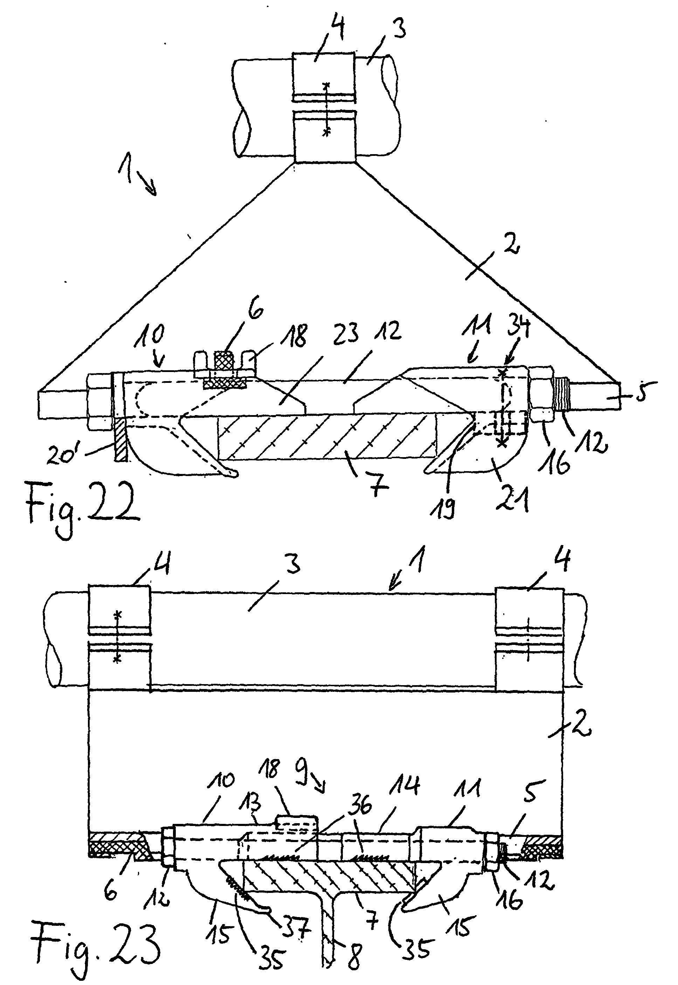

Die Abhebesicherung 18 kann eine Bohrung mit einem eingesetzten Gewindezapfen aufweisen, in welchen ein Abstands- und/oder Gleitelement 6 einschraubbar ist, vgl. Fig. 20, 21. Hierdurch ist die Nut zwischen der Abhebesicherung 18 und der Flanschoberfläche an die tatsächliche Fußgeometrie anpaßbar.

Der Rohrträger 2 kann sich wie in Fig. 22 dargestellt zwecks Gewicht- und Materialeinsparung von einem breiten flanschseitigen Ende zu einem schmalen rohrseitigen Ende verjüngen und so eine im wesentlichen dreieckige Form aufweisen. Zweckmäßigerweise ist der Rohrträger 2 in dieser Ausgestaltung nur unwesentlich breiter als die Halteeinrichtung 9, an welcher er beispielsweise durch Verschrauben befestigt sein kann. Zweckmäßig ist eine eine temperaturbedingte Längenausdehnung zulassende Befestigung an den Haltebacken 11 beidseitig des Rohrs 3, insbesondere wie gezeigt durch sich durch die Auflagestücke 19 (vgl. auch Fig. 10) und den Fuß 5 erstreckende Schraubverbindungen 34, von denen eine in der Fig. 22 durch eine gestrichelte Linie mit endseitigen Kreuzen symbolisiert ist. An der Haltebacke 10 wird der Fuß 5 über das Abstands- und Gleitelement 6 gleitverschieblich am Flansch 7 gehalten.

Ebenfalls zur Material- und Gewichtseinsparung können die Schenkel 13, 14 zur Aufnahme der Spannschraube 12 eine durchgehende Bohrung aufweisen, die an einem Ende einen kreisförmigen Querschnitt aufweist, der im Verlauf in einen rechteckigen Querschnitt übergeht, vgl. Fig. 21.

Ein Abschnitt 35 der sich an der Flanschkante abstützenden Seite des Schenkels 15 und/oder ein Abschnitt 36 der auf der Flanschoberfläche aufliegenden Seite des Schenkels 13 und/oder 14 bilden jeweils ein Bremselement, welches einem Verrutschen der Haltebacken 10, 11 gegenüber dem Trägerprofil 7 vorzugsweise durch eine entsprechend hohe Reibung der Flanschkante gegenüber den Abschnitten 35, 36 entgegenwirkt, vgl. Fig. 23. Beispielsweise kann das Bremselement mit einer in der Figur durch Schraffur angedeuteten Riffelung der Oberfläche der Abschnitte 35, 36 realisiert werden, wobei die Riffelung jede zweckentsprechende Oberflächenstruktur, insbesondere in Form von parallel und/oder in einem Winkel zur Flanschkante verlaufenden Rillen, und gegebenenfalls eine Aufrauhung der Oberfläche sein kann. Eine derartige Riffelung wird bevorzugt einstückig mit den Schenkeln 13, 14, 15 ausgebildet, kann jedoch auch durch ein separat geformtes Teil, z.B. ein gestanztes oberflächenstrukturiertes Blech, erreicht werden.

Die das Bremselement bildenden Abschnitte 35, 36 können auch gummielastische, an den Schenkeln 13, 14, 15 angebrachte Materialien sein. Zweckmäßig sind z.B. Kunststoffe mit hoher Festigkeit, die auf die Schenkel 13, 14, 15 aufgeklebt oder in diese eingesetzt sind bzw. die Schenkel 13, 14, 15 umklammernde Kunststoffe mit U-förmigem Querschnitt. Beim Ansetzen der Haltebacken 10, 11 an den Flansch 7 wirkt eine elastische oder plastische Verformung gegebenenfalls zusammen mit einer Riffelung oder Aufrauhung des gummielastischen Materials dem Verrutschen entgegen. Besonders vorteilhaft ist die Verwendung von Kunststoffen mit widerstandsfähigen Füllungen.

Der Schenkel 15 kann eine Haltenase 37 aufweisen, die zweckmäßigerweise ein sich in Richtung Trägerprofil 8 vom Schenkel 15 abgewinkelt erstreckender Endabschnitt des Schenkels 15 ist. Neigung und Länge des Endabschnitts sind dabei so zu wählen, daß die montierte Haltebacke 10 selbst dann nicht vom Flansch 7 abrutschen kann, wenn sie beispielsweise beim Festziehen der Spannschraube 12 zur Flanschoberfläche wegkippt.

## Patentansprüche

1. Rohrhalterung (1) mit einem Rohrträger (2), der einen Fuß (5) zur Auflage auf einem Trägerprofil (8) und eine Aufnahme für ein Rohr (3) quer zum Trägerprofil (8) aufweist und über eine mit dem Fuß (5) in Eingriff stehende Halteeinrichtung (9) an einem Flansch (7) des Trägerprofils (8) befestigbar ist, die zwei durch eine parallel zur Rohrachse angeordnete Spannschraube (12) miteinander verbindbare Haltebacken (10, 11) umfaßt, die einander gegenüberliegend angeordnet mit dem Flansch (7) des Trägerprofils (8) in Eingriff bringbar sind und jeweils einen sich auf dem Flansch (7) abstützenden und einen den Flansch (7) klemmend umgreifenden Schenkel (13, 14) aufweisen, **dadurch gekennzeichnet, daß** an den Haltebacken jeweils mindestens zwei Zähne in Form von beidseits der Spannschraube senkrecht zur Flanschoberfläche angeordneten Wandungen vorgesehen sind, die an der jeweiligen Haltebacke gleich voneinander und ungleich von der Spannschraube beabstandet sind und sich in Richtung auf die jeweils gegenüberliegende Haltebacke erstrecken, und die Haltebacken (10, 11) in Richtung der Rohrachse ineinanderschiebbar sind.

2. Rohrhalterung nach Anspruch 1, **dadurch gekennzeichnet, daß** mindestens einer der sich auf dem Flansch (7) abstützenden Schenkel (13, 14) einen zylindrischen, hohlzylindrischen oder flanschseitig offenen U-förmigen Endabschnitt aufweist bzw. bildet.

3. Rohrhalterung nach Anspruch 1 oder 2, **dadurch gekennzeichnet, daß** mindestens zwei Zähne der einen Haltebacke (10, 11) weiter voneinander beabstandet sind als die entsprechenden Zähne der anderen Haltebacke (10, 11).

4. Rohrhalterung nach einem der Ansprüche 1 bis 3, **dadurch gekennzeichnet, daß** der sich auf dem Flansch (7) abstützende Schenkel (13, 14) ein Rohrabschnitt ist.

5. Rohrhalterung nach einem der Ansprüche 1 bis 4, **dadurch gekennzeichnet, daß** der sich auf dem Flansch (7) abstützende Schenkel (13, 14) zwei sich teilweise überlappende und miteinander verbundene zumindest U-förmige Abschnitte, insbesondere Rohrabschnitte umfaßt.

6. Rohrhalterung nach einem der Ansprüche 1 bis 5, **dadurch gekennzeichnet, daß** der sich auf dem Flansch (7) abstützende Schenkel (13, 14) in eine Bohrung eines den Flansch (7) umgreifenden Schenkels (15) der Haltebacke (10, 11) eingesetzt ist.

7. Rohrhalterung nach einem der Ansprüche 1 bis 6, **dadurch gekennzeichnet, daß** der sich auf dem Flansch abstützende Schenkel (13, 14) und ein den Flansch (7) umgreifender Schenkel (15) der Haltebacke (10, 11) jeweils eine dem Verrutschen oder Kippen gegenüber dem Flansch (7) entgegenwirkendes Bremselement aufweisen.

8. Rohrhalterung nach einem der Ansprüche 1 bis 7, **dadurch gekennzeichnet, daß** die Haltebacken (10, 11) durch einen Steg (20, 20') insbesondere einstückig miteinander verbunden sind.

9. Rohrhalterung nach einem der Ansprüche 1 bis 8, **dadurch gekennzeichnet, daß** an der Haltebacke (10, 11) eine Aufnahme (25) vorgesehen ist, mit welcher ein Element der Rohrhalterung (1), insbesondere eine Abhebesicherung (18), ein Auflagestück (19), der Rohrträger (2) oder ein Adapterstück (26) für einen Rohrträger (2), in Eingriff bringbar ist.

10. Rohrhalterung nach Anspruch 9, **dadurch gekennzeichnet, daß** der Rohrträger (2) einen mit dem Adapterstück (26) oder der Aufnahme (25) in Eingriff bringbaren Fuß (5) umfaßt und zur Aufnahme eines Rohrs (3) eine Schelle (4) oder einen U-förmigen, mit seinen freien Enden an einer Auflagefläche (27) für das Rohr (3) verschraubten Rundbügel (28) umfaßt.

11. Rohrhalterung nach Anspruch 10, **dadurch gekennzeichnet, daß** der Rundbügel (28), insbesondere durch einen aufgesteckten Kunststoffschlauch (29), ummantelt ist.

12. Rohrhalterung nach Anspruch 10 oder 11, **dadurch gekennzeichnet, daß** zwischen dem Rohr (3) und der Auflagefläche (27) ein Kunststoffeinsatz (30) mit einer mittigen Senke (31) vorgesehen ist.

13. Rohrhalterung nach einem der Ansprüche 1 bis 12, **dadurch gekennzeichnet, daß** an der dem Flansch (7) abgewandten Seite mindestens einer Haltebacke (10, 11) zumindest eine Verstärkungsrippe (21) vorgesehen ist.

14. Rohrhalterung nach einem der Ansprüche 1 bis 13, **dadurch gekennzeichnet, daß** wenigstens eine der Haltebacken (10, 11) ein Blechhohlkörper ist, wobei wenigstens ein den Flansch (7) umgreifender Schenkel (15) mit Kunststoff gefüllt ist.

15. Rohrhalterung nach einem der Ansprüche 1 bis 14, **dadurch gekennzeichnet, daß** der Rohrträger (2) flanschseitig breiter ist als rohrseitig.

## Claims

1. Pipe holder (1) having a pipe support (2) which has a foot (5) for resting on a supporting profile (8) and a means for receiving a pipe (3) in a direction transverse to the supporting profile (8) and which is arranged to be fastened to a flange (7) on the supporting profile (8) by means of a holding device (9) in engagement with the foot (5), which holding device (9) comprises two holding jaws (10, 11), which are arranged to be connected to one another by means of a clamping screw (12) arranged parallel to the axis of the pipe and which are arranged to be brought into engagement with the flange (7) on the supporting profile (8) opposite one another and each of which has a limb (13, 14) resting on the flange (7) and clampingly engaging around the flange (7), **characterised in that** on each of the holding jaws there are provided at least two teeth in the form of wall portions arranged to either side of the clamping screw perpendicular to the flange surface, which teeth on each particular holding jaw are spaced equally apart from one another and unequally from the clamping screw and extend towards the holding jaw located opposite in each case; and the holding jaws (10, 11) are arranged to be pushed into one another in the direction of the axis of the pipe.

2. Pipe holder according to claim 1, **characterised in that** at least one of the limbs (13, 14) resting on the flange (7) has or forms a cylindrical or hollow-cylindrical end portion or a U-shaped end portion that is open towards the flange.

3. Pipe holder according to claim 1 or 2, **characterised in that** at least two teeth of one holding jaw (10, 11) are spaced further apart from one another than the corresponding teeth of the other holding jaw (10, 11).

4. Pipe holder according to one of claims 1 to 3, **characterised in that** the limb (13, 14) resting on the flange (7) is a tubular portion.

5. Pipe holder according to one of claims 1 to 4, **characterised in that** the limb (13, 14) resting on the flange (7) comprises two partially overlapping and interconnected portions which are at least U-shaped, especially tubular.

6. Pipe holder according to one of claims 1 to 5, **characterised in that** the limb (13, 14) resting on the flange (7) is inserted into a hole in a limb (15) of the holding jaw (10, 11), which latter limb (15) engages around the flange (7).

7. Pipe holder according to one of claims 1 to 6, **characterised in that** the limb (13, 14) resting on the flange and a limb (15), engaging around the flange (7), of the holding jaw (10, 11) each have a braking element acting against slipping or tilting with respect to the flange (7).

8. Pipe holder according to one of claims 1 to 7, **characterised in that** the holding jaws (10, 11) are, especially integrally, connected to one another by a bridge (20, 20').

9. Pipe holder according to one of claims 1 to 8, **characterised in that** on the holding jaw (10, 11) there is provided a receiving means (25), with which an element of the pipe holder (1), especially a lifting-off protection means (18), a supporting piece (19), the pipe support (2) or an adapter piece (26) for a pipe support (2), is arranged to be brought into engagement.

10. Pipe holder according to claim 9, **characterised in that** the pipe support (2) comprises a foot (5) arranged to be brought into engagement with the adapter piece (26) or receiving means (25) and, for accommodating a pipe (3), comprises a clip (4) or a U-shaped arcuate yoke (28) the free ends of which are bolted onto a support surface (27) for the pipe (3).

11. Pipe holder according to claim 10, **characterised in that** the arcuate yoke (28) is sheathed, especially by means of plastics tubing (29) pushed onto it.

12. Pipe holder according to claim 10 or 11, **characterised in that** between the pipe (3) and the support surface (27) there is provided a plastics insert (30) having a central depression (31).

13. Pipe holder according to one of claims 1 to 12, **characterised in that** at least one reinforcing rib (21) is provided on that side of at least one holding jaw (10, 11) which is remote from the flange (7).

14. Pipe holder according to one of claims 1 to 13, **characterised in that** at least one of the holding jaws (10, 11) is a hollow body of sheet metal, at least one limb (15) engaging around the flange (7) being filled with plastics material.

15. Pipe holder according to one of claims 1 to 14, **characterised in that** the pipe support (2) is wider at the flange end than at the pipe end.

## Revendications

1. Support de tube (1) avec un porte-tube (2), qui comporte un pied (5) destiné à être posé sur un profilé de support (8) et un logement destiné à recevoir un tube (3) transversalement au profilé de support (8), et qui est destiné à être fixé contre une bride (7) du profilé de support (8) par l'intermédiaire d'un organe de retenue (9) en prise avec le pied (5), lequel comporte deux mâchoires de serrage (10, 11), qui sont destinées à être assemblées l'une à l'autre par une vis de serrage (12) parallèle à l'axe du tube, et qui, disposées en regard l'une de l'autre, peuvent être amenées en prise avec la bride (7) du profilé de support (8) et comportent chacune une branche (13, 14), dont l'une vient en appui sur la bride (7) et l'autre enserre la bride (7), **caractérisé en ce qu'**au niveau de chacune des mâchoires de serrage sont prévues au moins deux dents en forme de parois, qui s'étendent de part et d'autre de la vis de serrage perpendiculairement à la surface de la bride, et qui sont disposées sur la mâchoire de serrage concernée à même distance l'une de l'autre et à distance différente de la vis de serrage et qui s'étendent en direction de la mâchoire de serrage respectivement en face et les mâchoires de serrage (10, 11) sont mobiles pour s'emboîter l'une dans l'autre dans le sens de l'axe du tube.

2. Support de tube selon la revendication 1, **caractérisé en ce qu'**au moins l'une des branches (13, 14) en appui sur la bride (7) comporte ou forme une extrémité cylindrique, cylindrique creuse ou en forme de U ouvert vers la bride.

3. Support de tube selon la revendication 1 ou 2, **caractérisé en ce qu'**au moins deux dents de l'une des mâchoires de serrage (10, 11) sont davantage écartées que les dents correspondantes de l'autre mâchoire de serrage (10, 11).

4. Support de tube selon l'une quelconque des revendications 1 à 3, **caractérisé en ce que** la branche (13, 14) en appui sur la bride (7) est un tronçon de tube.

5. Support de tube selon l'une quelconque des revendications 1 à 4, **caractérisé en ce que** la branche (13, 14) en appui sur la bride (7) comporte deux tronçons au moins en forme de U, en particulier des tronçons de tube, qui se chevauchent partiellement et sont assemblés l'un à l'autre.

6. Support de tube selon l'une quelconque des revendications 1 à 5, **caractérisé en ce que** la branche (13, 14) en appui sur la bride (7) est insérée dans un perçage d'une branche (15) de la mâchoire de serrage (10, 11), laquelle entoure la bride (7).

7. Support de tube selon l'une quelconque des revendications 1 à 6, **caractérisé en ce que** la branche (13, 14) en appui sur la bride (7) et une branche (15), entourant la bride (7), de la mâchoire de serrage (10, 11) comportent chacune un élément de blocage empêchant le glissement ou le basculement par rapport à la bride (7).

8. Support de tube selon l'une quelconque des revendications 1 à 7, **caractérisé en ce que** les mâchoires de serrage (10, 11) sont assemblées l'une à l'autre, en particulier d'un seul tenant, par une traverse (20, 20').

9. Support de tube selon l'une quelconque des revendications 1 à 8, **caractérisé en ce qu'**il est prévu contre la mâchoire de serrage (10, 11) un logement (25) avec lequel peut être amené en prise un élément du support de tube (1), en particulier un élément de blocage (18) du mouvement vers le haut, un élément d'appui (19), le porte-tube (2) ou un élément d'adaptation (26) pour un porte-tube (2).

10. Support de tube selon la revendication 9, **caractérisé en ce que** le porte-tube (2) comporte un pied (5) destiné à être amené en prise avec l'élément d'adaptation (26) ou le logement (25) et, en vue de recevoir un tube (3), comporte un collier de serrage (4) ou un étrier arrondi (28) en forme de U dont l'extrémité libre est vissée contre une surface d'appui (27) pour le tube (3).

11. Support de tube selon la revendication 10, **caractérisé en ce que** l'étrier arrondi (28) est entouré en partie par un tuyau flexible (29) en matière plastique emmanché sur ledit étrier.

12. Support de tube selon la revendication 10 ou 11, **caractérisé en ce qu'**entre le tube (3) et la surface d'appui (27) est prévue une pièce intercalaire (30) en matière plastique avec une dépression (31) centrale.

13. Support de tube selon l'une quelconque des revendications 1 à 12, **caractérisé en ce qu'**au moins une ailette de renfort (21) est prévue sur le côté d'au moins une mâchoire de serrage (10, 11), opposé à la bride (7).

14. Support de tube selon l'une quelconque des revendications 1 à 13, **caractérisé en ce qu'**au moins l'une des mâchoires de serrage (10, 11) est un corps creux en tôle, au moins une branche (15), qui s'engage autour de la bride (7), étant remplie de matière plastique.

15. Support de tube selon l'une quelconque des revendications 1 à 14, **caractérisé en ce que** le porte-tube (2) est plus large du côté de la bride que du côté du tube.
